# EUROPEAN PATENT APPLICATION

(11) **EP 2 008 889 A1**
(43) Date of publication of application: **31.12.2008**
(21) Application number: 07110936.7
(22) Date of filing: 25.06.2007
(51) Int. Cl.: B60S 1/38

(54) **Windscreen wiper device**

(71) Applicant: Federal-Mogul S.A., 6790 Aubange (BE)
(72) Inventor: Coos, Eric Federal-Mogul S.A., 54720, Cheniere (FR)
(74) Representative: Hooiveld, Arjen Jan Winfried

(57) **Abstract**

A windscreen wiper device (1) comprising an elastic, elongated carrier element, as well as an elongated wiper blade (2) of a flexible material, which wiper blade comprises a wiping element for wiping a windscreen, which wiper blade includes opposing longitudinal grooves (3) on its longitudinal sides, in which grooves spaced-apart longitudinal strips (4) of the carrier element are disposed, wherein neighbouring ends of the longitudinal strips are interconnected by a respective connecting piece (6), which windscreen wiper device comprises a connecting device (7) for an oscillating arm (8), wherein the oscillating arm (8) is pivotally connected to the connecting device (7) about a pivot axis near one end, wherein the windscreen wiper device is further provided with an elongated protective element (9) detachably connected to the wiper blade (2) and covering the wiping element thereof, wherein the protective element (9) includes a wiping element (12) integral therewith for wiping the windscreen, with the special feature that the wiping element (12) of the protective element (9) is provided with two tilting web grooves (13) defining a tilting web between them, and with a wiping lip (16) on the tilting web to be placed in abutment with the windscreen to be wiped.

## Description

The present invention relates to a windscreen wiper device comprising an elastic, elongated carrier element, as well as an elongated wiper blade of a flexible material, which wiper blade comprises a wiping element for wiping a windscreen, which wiper blade includes opposing longitudinal grooves on its longitudinal sides, in which grooves spaced-apart longitudinal strips of the carrier element are disposed, wherein neighbouring ends of the longitudinal strips are interconnected by a respective connecting piece, which windscreen wiper device comprises a connecting device for an oscillating arm, wherein the oscillating arm is pivotally connected to the connecting device about a pivot axis near one end, wherein the windscreen wiper device is further provided with an elongated protective element detachably connected to the wiper blade and covering the wiping element thereof, wherein the protective element includes a wiping element integral therewith for wiping the windscreen.

Such a windscreen wiper device is generally known. This prior art windscreen wiper device is designed as a "yokeless" wiper device, wherein no use is made of several yokes pivotally connected to each other, but wherein the wiper blade is biassed by the carrier element, as a result of which it exhibits a specific curvature. The protective element of this prior art windscreen wiper device serves to protect the wiping element of the wiper blade until delivery of a new car to a purchaser. Moreover, with the aid of the wiping element of this known protective element the windscreen of such a new car can be wiped in the case of manoeuvring drives which are necessary up to delivery.

In practice it has become apparent that, during use of the known protective element, the wiping results are unsatisfactory, with all negative consequences involved.

The object of the invention is to provide a windscreen wiper device with a protective element for protecting the wiper blade thereof, wherein excellent wiping properties are achieved.

Thereto, a windscreen wiper device of the type referred to in the introduction is characterized according to the invention in that the wiping element of the protective element is provided with two tilting web grooves defining a tilting web between them, and with a wiping lip on the tilting web to be placed in abutment with the windscreen to be wiped. The tilting web acts as an intermediate part subjected to a force in accordance with the wiping direction. Said force acts solely on said tilting web, so that the wiping lip attached thereto is guided in opposite direction to the wiping direction. Particularly, said tilting web is strip-shaped, whereas said wiping lip is triangular in shape. In the alternative said wiping is rhomboid in shape. Experiments have shown that the wiping quality thereof is at the highest level, while a safe protection of the wiping element of the wiper blade is assured until delivery of a new car to a purchaser.

In one preferred embodiment of a windscreen wiper device in accordance with the invention said wiping lip is made of an elastomer material. Preferably, said wiping lip is made of a thermoplastic elastomer.

In another preferred embodiment of a windscreen wiper device according to the invention the protective element is a co-extruded profile.

In another preferred embodiment of a windscreen wiper device in accordance with the invention the protective element is snapped onto the wiper blade. Particularly, the protective element comprises a part with a U-shaped cross-section, wherein the base of said U-shaped cross-section is connected to the wiping element of the protective element, and wherein the legs of said U-shaped cross-section are each provided with an L-shaped engaging member for snappingly engaging said wiper blade.

The invention also relates to an elongated protective element arranged to be detachably connected to a wiper blade of a windscreen wiper device and covering the wiping element thereof, wherein the protective element includes a wiping element integral therewith for wiping a windscreen, characterized in that the wiping element of the protective element is provided with two tilting web grooves defining a tilting web between them, and with a wiping lip on the tilting web to be placed in abutment with the windscreen to be wiped.

The invention will now be explained in more detail with reference to figures illustrated in a drawing, wherein
- Figure 1 shows a perspective, schematic view of a windscreen wiper device according to the invention; and
- Figure 2 is a perspective, schematic cross-section of a protective element in accordance with the invention to be used in a windscreen wiper device of figure 1.

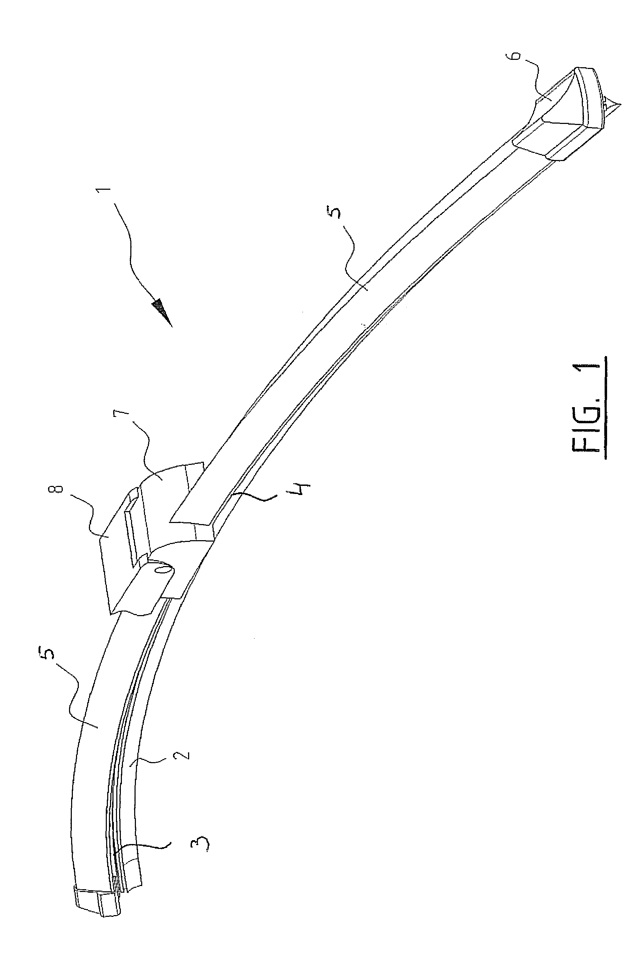

Figure 1 shows a windscreen wiper device 1 of the "yokeless" type according to the invention. Said windscreen wiper device is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the rubber wiper blade 2, as it were, which is thus biassed in a curved position (the curvature in operative position being that of a windscreen to be wiped). Neighbouring ends of strips 4 are interconnected on either side of the windscreen wiper device 1 by means of connecting pieces 6 functioning as clamping members. In this embodiment, the connecting pieces 6 are separate constructional elements, which may be form-locked ("positive locking" or "having positive fit") as well as force-locked to the ends of strips 4. In another preferred variant, said connecting pieces 6 are in one piece with the strips 4 made of spring band steel. In the latter case said connecting pieces form transverse bridges for the strips 4, as it were. Possibly, a spoiler 5 is furthermore provided.

The windscreen wiper device 1 is furthermore built up of a connecting device 7 of plastic material for an oscillating wiper arm 8. The oscillating wiper arm 8 is pivotally connected to the connecting device 7 about a pivot axis near one end.

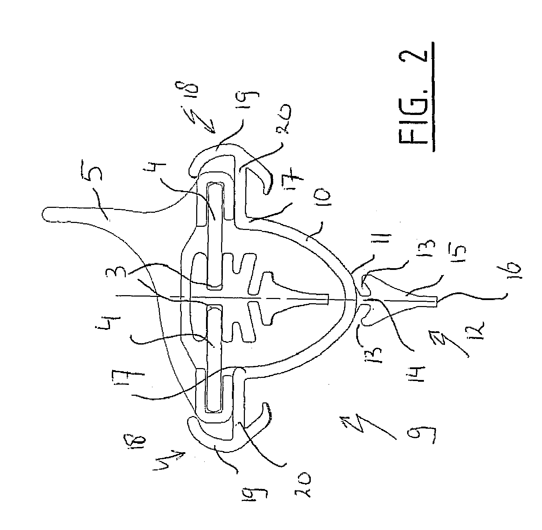

As can be seen in figure 2, a soft rubber protective element 9 is detachably connected in its entirety to said wiper blade 2. The protective element 9 consists of an elongated protective part 10 with a U-shaped cross-section, while the base 11 of said U-shaped cross-section is provided with a downwardly extending wiping part or wiping element 12. Said wiping element 12 consists of two tilting web grooves 13 defining a strip-like tilting web 14 between them, as well as a downwardly extending wiping lip 15 on the tilting web 14. Said wiping lip 15 rests with its free end 16 on a windscreen to be wiped. In action said wiping lip 15 as if it were a hinge tilts in its oscillation reversal positions. The legs 17 of said U-shaped cross-section each comprise in one piece therewith an elastic L-shaped engaging member 18 for snappingly engaging said wiper blade 2 between the legs 19,20 of said elastic L-shaped engaging member 18. The protective element 9 is an integral co-extruded piece.

The invention is not restricted to the variants shown in the drawing, but it also extends to other embodiments that fall within the scope of the appended claims.

## Claims

1. A windscreen wiper device comprising an elastic, elongated carrier element, as well as an elongated wiper blade of a flexible material, which wiper blade comprises a wiping element for wiping a windscreen, which wiper blade includes opposing longitudinal grooves on its longitudinal sides, in which grooves spaced-apart longitudinal strips of the carrier element are disposed, wherein neighbouring ends of the longitudinal strips are interconnected by a respective connecting piece, which windscreen wiper device comprises a connecting device for an oscillating arm, wherein the oscillating arm is pivotally connected to the connecting device about a pivot axis near one end, wherein the windscreen wiper device is further provided with an elongated protective element detachably connected to the wiper blade and covering the wiping element thereof, wherein the protective element includes a wiping element integral therewith for wiping the windscreen, **characterized in that** the wiping element of the protective element is provided with two tilting web grooves defining a tilting web between them, and with a wiping lip on the tilting web to be placed in abutment with the windscreen to be wiped.

2. A windscreen wiper device according to claim 1, wherein said tilting web is strip-shaped.

3. A windscreen wiper device according to claim 1 or 2, wherein said wiping lip is triangular in shape.

4. A windscreen wiper device according to claim 1, 2 or 3, wherein said wiping lip is made of an elastomer material.

5. A windscreen wiper device according to claim 4, wherein said wiping lip is made of a thermoplastic elastomer.

6. A windscreen wiper device according to any of the preceding claims 1 through 5, wherein the protective element is a co-extruded profile.

7. A windscreen wiper device according to any of the preceding claims 1 through 6, wherein the protective element is snapped onto the wiper blade.

8. A windscreen wiper device according to claim 7, wherein the protective element comprises a part with a U-shaped cross-section, wherein the base of said U-shaped cross-section is connected to the wiping element of the protective element, and wherein the legs of said U-shaped cross-section are each provided with an L-shaped engaging member for snappingly engaging said wiper blade.

9. An elongated protective element arranged to be detachably connected to a wiper blade of a windscreen wiper device and covering the wiping element thereof, wherein the protective element includes a wiping element integral therewith for wiping a windscreen, **characterized in that** the wiping element of the protective element is provided with two tilting web grooves defining a tilting web between them, and with a wiping lip on the tilting web to be placed in abutment with the windscreen to be wiped.
